# EUROPÄISCHE PATENTANMELDUNG

(11) **EP 3 156 697 A1**
(43) Veröffentlichungstag der Anmeldung: **19.04.2017**
(21) Anmeldenummer: 16178097.8
(22) Anmeldetag: 06.07.2016
(51) Int. Cl.: F16J 15/00, F16J 15/3288

(54) **BÜRSTENDICHTUNG SOWIE TURBOMASCHINE MIT BÜRSTENDICHTUNG**

(30) Priorität: 14.10.2015 DE 102015219946
(71) Anmelder: Siemens Aktiengesellschaft, 80333 München (DE)
(72) Erfinder: Knobloch, Thomas, 01454 Radeberg OT Liegau-Augustusbad (DE)

(57) **Zusammenfassung**

Die Erfindung betrifft eine Bürstendichtung (1) zur Abdichtung eines Spaltes (2) zwischen einer Welle (3) und einem Gehäuse (4). Die Bürstendichtung weist wenigstens zwei in Reihe geschaltete Bürstenpakete (5, 6) auf, welche jeweils aus einer Vielzahl von einzelnen, im Wesentlichen senkrecht zur Wellenachse (7) gerichteten Posten (8) besteht. Die Borsten zumindest des in Strömungsrichtung vorderen Bürstenpakets (5) sind entgegen der Strömungsrichtung um einen Anstellwinkel (α) angestellt. Hierdurch reduziert sich das Aufschwingverhalten der einzelnen Borsten (8), wodurch die Bürstendichtung (1) höheren Druckdifferenzen stand hält, ohne dass es zur Zerstörung der Bürstendichtung (1) kommt.

## Beschreibung

Die Erfindung betrifft eine Bürstendichtung zum Abdichten eines Spaltes zwischen einer Welle und einem Gehäuse nach den Merkmalen des unabhängigen Patentanspruchs 1. Des Weiteren betrifft die Erfindung eine Turbomaschine mit einer solchen Bürstendichtung nach dem nebengeordneten Patentanspruch 6.

Bürstendichtungen sind berührungslose Dichtelemente, die zur Abdichtung zwischen drehenden Wellen und stehenden Gehäusen verwendet werden. Die Bürstendichtung weist üblicherweise mehrere in Reihe geschaltete Bürstenpakete auf, die aus einer Vielzahl an Borsten bestehen. Aufgrund aerodynamischer Instabilitäten kommt es im Betrieb zu einem Aufschwingen der einzelnen Bürstenpakete. Aufgrund des Aufschwingens der Bürstenpakete kommt es in Folge zu einer Verringerung der Druckdifferenz, die über das einzelne Bürstenpaket abbaubar ist. Der Druckabfall verteilt sich bei der Bürstendichtung nicht gleichmäßig auf die einzelnen Bürstenpakete. Am ersten Bürstenpaket kommt es nur zu einem kleinen Druckabfall, während das letzte Bürstenpaket einen großen Druckabfall bewältigen muss. Der Druckverlauf für die Bürstendichtung verläuft entlang einer Fanno-Kurve.

Bei großen Druckdifferenzen zwischen einem Innenraum und einem Außenraum kann die Druckdifferenz am letzten Bürstenpaket derart groß sein, dass dieses überlastet und das Dichtelement als Ganzes schließlich zerstört wird.

Um eine Zerstörung der Bürstendichtung zu vermeiden, sieht die DE 37 41 020 A1 eine Entlastungsleitung vor, durch die ein definierter Druck aus dem Raum hinter einem Bürstenpaket abgeführt werden kann, so dass die Druckdifferenz zwischen dem Raum vor und dem Raum hinter dem Bürstenpaket einen zulässigen Druck nicht überschreitet. Nachteilig an einer solchen Lösung ist jedoch, dass über die Abfuhrleitung ein Leckagestrom entsteht, der verlorengeht. Außerdem ist die Konstruktion einer solchen Bürstendichtung aufwendig und daher teuer.

Ausgehend vom zuvor beschriebenen Stand der Technik ist es daher Aufgabe der vorliegenden Erfindung, eine Bürstendichtung zum Abdichten eines Spaltes zwischen einer sich drehenden Welle und einem stehenden Gehäuse bereitzustellen, welche einer höheren Druckdifferenz standhält und bei der insbesondere das Aufschwingen der Borsten der einzelnen Bürstenpakete verringert wird. Des Weiteren ist es Aufgabe der vorliegenden Erfindung, eine Turbomaschine mit einer solchen Bürstendichtung bereitzustellen.

Die Aufgabe wird bezüglich der Bürstendichtung durch die Merkmale des unabhängigen Patentanspruchs 1 und hinsichtlich der Turbomaschine durch die Merkmale des nebengeordneten Patentanspruchs 6 gelöst.

Vorteilhafte Ausgestaltungen und Weiterbildungen, welche einzeln oder in Kombination miteinander einsetzbar sind, sind Gegenstand der Unteransprüche.

Die erfindungsgemäße Bürstendichtung zur Abdichtung eines Spaltes zwischen einer Welle und einem Gehäuse, mit wenigstens zwei in Reihe geschalteten Bürstenpaketen, welche jeweils aus einer Vielzahl von einzelnen, im Wesentlichen senkrecht zur Wellenachse gerichteten Borsten besteht, zeichnet sich dadurch aus, dass die Borsten zumindest des in Strömungsrichtung vorderen Bürstenpakets entgegen der Strömungsrichtung um einen Anstellwinkel α angestellt sind. Das Anstellen der Borsten entgegen der Strömungsrichtung erhöht die Biegesteifigkeit der einzelnen Borsten, wodurch das Aufschwingverhalten der Borsten und damit des Bürstenpaketes deutlich verringert wird. Durch das verringerte Aufschwingverhalten kann das einzelne Bürstenpaket einer größeren Druckdifferenz ΔP standhalten, ohne zerstört zu werden.

Eine Ausgestaltung der Erfindung sieht vor, dass das Anstellen der Borsten durch Neigen der geraden Borsten entgegen der Strömungsrichtung erfolgt. Das Neigen der geraden Borsten stellt eine besonders einfache Ausführungsform dar.

Eine weitere Ausgestaltung der Erfindung sieht vor, dass das Anstellen der Borsten durch Biegen/Knicken der Borsten entgegen der Strömungsrichtung erfolgt. Durch das Biegen bzw. Knicken der Borsten wird im Gegensatz zum reinen Neigen der geraden Borsten die Biegesteifigkeit der einzelnen Borsten erhöht und so das Aufschwingverhalten der Bürstenpakete weiter verringert. Eine besonders vorteilhafte Ausgestaltung der Erfindung sieht vor, dass die Borsten um einen Radius R gebogen sind. Die gebogene Form der Borsten stellt eine sehr biegesteife Ausgestaltung dar, so dass diese Form einer besonders großen Druckdifferenz ΔP standhalten kann. Das Biegen kann dabei über einen Rundkörper auf einfache und preiswerte Weise erfolgen.

Der Anstellwinkel α ist in Abhängigkeit der Art der Anstellung der Borsten definiert. Bei gebogenen Borsten ergibt sich der Anstellwinkel α aus dem Winkel zwischen einer gedachten Tangente welche an die gebogenen Borsten angelegt wird und einer gedachte radialen Linie bezogen auf die Wellenachse(siehe Fig.1). Bei geraden angestellten Borsten ergibt sich der Anstellwinkel α aus dem Winkel zwischen den geraden angestellten Borsten und einer gedachte radialen Linie bezogen auf die Wellenachse (siehe Fig.2). Sind lediglich die unteren Enden der Borsten abgeknickt/gebogen gilt die Definition des Anstellwinkels α analog (siehe Fig. 3).

Eine weitere Ausgestaltung der Erfindung sieht vor, dass jeweils das in Strömungsrichtung vordere Bürstenpaket einen größeren Anstellwinkel α1 als das jeweils nachfolgende Bürstenpaket α2 aufweist. Hierdurch lässt sich ein gleichmäßiger Druckabfall ΔP über die einzelnen Bürstenpakete steuern, so dass nicht wie beim Stand der Technik jeweils das letzte Bürstenpaket den größten Druckabfall bewältigen muss. Hierdurch wird einer Zerstörung der Bürstendichtung in Folge Überlastung entgegengewirkt.

Eine weitere Ausgestaltung der Erfindung sieht vor, dass wenigstens zwei in Reihe geschaltete Bürstenpakete in einem gemeinsamen Bürstenhalter angeordnet sind. Der Bürstenhalter ist üblicherweise im Gehäuse befestigt. Durch das Unterbringen von mehreren Bürstenpaketen in einem Bürstenhalter wird das aerodynamische Verhalten der Bürstenpakete vorteilhaft beeinflusst und das in Folge der aerodynamischen Instabilitäten hervorgerufene Aufschwingen der Bürstenpakete verringert.

Die erfindungsgemäße Turbomaschine zeichnet sich dadurch aus, dass sie eine Bürstendichtung nach einem der zuvor beschriebenen Ansprüche aufweist. Aufgrund der neuartigen Bürstendichtung kann der Spalt zwischen der Welle und dem Gehäuse wirkungsvoll abgedichtet werden, wodurch sich zum einen die Betriebssicherheit verbessert und zum anderen aufgrund der besseren Dichtwirkung der Wirkungsgrad der Turbomaschine erhöht.

Eine Ausgestaltung der Turbomaschine sieht vor, dass die Turbomaschine eine Dampfturbine ist. Bei Dampfturbinen ist die Abdichtung zwischen der Welle und dem Turbinengehäuse besonders wichtig, da hierdurch Leckageströmungen verhindert und der Wirkungsgrad erhöht werden kann.

Ausführungsbeispiele und weitere Vorteile der Erfindung werden nachfolgend anhand der Figuren erläutert.

Es zeigt:

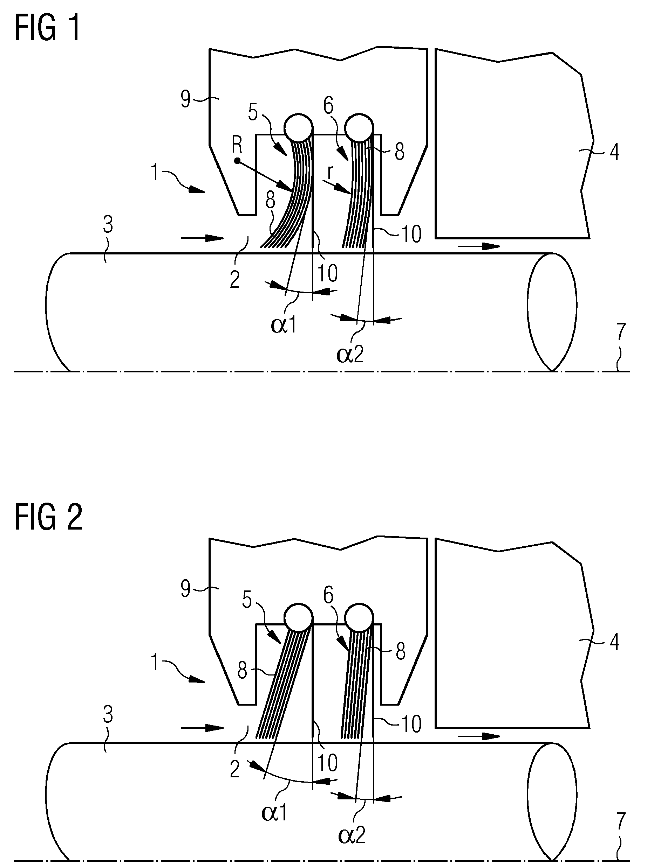

- Figur 1: ein erstes Ausführungsbeispiel einer erfindungsgemäßen Bürstendichtung mit um einen Radius R gebogenen Borsten;
- Figur 2: ein zweites Ausführungsbeispiel einer erfindungsgemäße Bürstendichtung mit geraden, geneigten Borsten; und

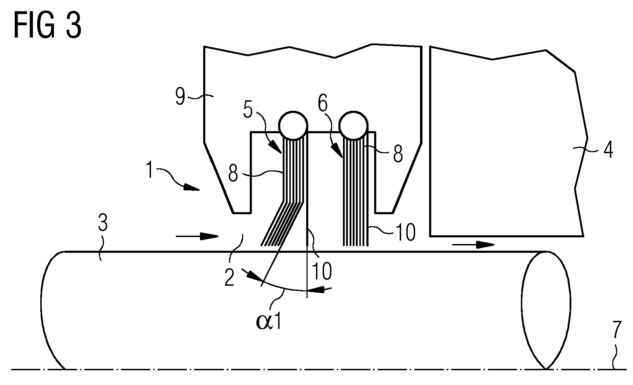

- Figur 3: ein drittes Ausführungsbeispiel einer erfindungsgemäße Bürstendichtung mit geknickten Borstenenden.

Bei den Figuren handelt es sich jeweils um vereinfachte Darstellungen der Bürstendichtung, bei denen nur die zur Beschreibung notwendigen Bauteile gezeigt sind. Gleiche bzw. funktionsgleiche Bauteile sind figurenübergreifend mit denselben Bezugszeichen versehen.

Figur 1 zeigt einen Axialschnitt durch eine Bürstendichtung 1 entlang einer Wellenachse 7. Die Bürstendichtung 1 besteht aus insgesamt zwei in Reihe geschalteten Bürstenpaketen 5, 6, die in einem gemeinsamen Bürstenhalter 9 angeordnet sind. Jedes Bürstenpaket 5, 6 besteht aus einer Vielzahl von einzelnen, im Wesentlichen senkrecht zur Wellenachse 7 gerichteten Borsten 8. Die einzelnen Borsten 8 der Bürstenpakete 5, 6 dichten den Spalt zwischen der Welle 3 und dem Gehäuse 4 ab und verhindern hierdurch eine ungewollte Leckageströmung durch den Spalt 2. Die Borsten 8 des in Strömungsrichtung vorderen Bürstenpakets 5 sind entgegen der Strömungsrichtung um einen Anstellwinkel α₁ angestellt. Der Anstellwinkel α₁ bezeichnet dabei die Auslenkung der Borsten 8 entgegen der Strömungsrichtung. Der Anstellwinkel α₁ ergibt sich bei gebogenen Borsten 8 aus dem Winkel zwischen einer gedachten Tangente, welche sich an den Radius R anlehnt und einer gedachten Radiallinie bezogen auf die Wellenachse 7. Durch die Biegung der Borsten 8 ergibt sich eine höhere Biegesteifigkeit der Borsten 8. Hierdurch können die Borsten 8 der Strömung einen größeren Widerstand entgegensetzen und einer größeren Druckdifferenz ΔP, welche sich aus dem Druck vor und hinter dem jeweiligen Bürstenpaket 5, 6 ergibt, standhalten. Die höhere Biegesteifigkeit der Borsten 8 sorgt dafür, dass die einzelnen Borsten 8 bzw. das gesamte Bürstenpaket 5, 6 nicht aufgrund der aerodynamischen Instabilitäten zum Schwingen gebracht wird, wodurch sich insbesondere die Borsten 8 nicht so leicht in Strömungsrichtung umlegen können und dadurch der Strömung keinen hinreichenden Widerstand entgegenbringen können. Um ein Umlegen der Borsten 8 in Strömungsrichtung zu vermeiden, sind zusätzliche Anlagebleche 10 vorgesehen.
Das zweite, in Strömungsrichtung hintere Bürstenpaket 6 kann ebenfalls mit gebogenen Borsten 8 ausgebildet sein. Dabei ist jedoch darauf zu achten, dass der Anstellwinkel α₁ des vorderen Bürstenpakets 5 größer ist als der Anstellwinkel α₂ des hinteren Bürstenpakets 6 (Biegeradius R des vorderen Bürstenpaketes 5, größer als Biegeradius r des hinteren Bürstenpaketes 6) um so den Druckabfall ΔP über die Bürstenpakete 5, 6 möglich gleichmäßig zu verteilen. Die Borsten 8 des hinteren Bürstenpakets 6 können auch wie bislang üblich radial, zur Wellenachse 7, ausgerichtet sein.

Figur 2 zeigt eine zweite Ausgestaltung einer erfindungsgemäßen Bürstendichtung 1. Die grundsätzliche Anordnung entspricht der bereits in Figur 1 dargestellten, so dass hier auf dessen Beschreibung verwiesen wird. Im Unterschied zu der in Figur 1 dargestellten Bürstendichtung 1 sind die Borsten 8 der einzelnen Bürstenpakete 5, 6 jedoch nicht gebogen, sondern das Anstellen der Borsten 8 in Strömungsrichtung erfolgt durch einfaches Neigen der geraden Borsten 8. Der Anstellwinkel α₁ bzw. α₂ ergibt sich aus der Auslenkung der geraden Borsten aus der radialen Anstellung. Das Neigen der geraden Borsten 8 stellt eine besonders einfache Ausführung dar, allerdings weisen die geraden, geneigten Borsten 8 eine im Gegensatz zu den in Figur 1 dargestellten gebogenen Borsten 8 geringere Biegesteifigkeit auf. Hierdurch neigen die Borsten 8 stärker zum Aufschwingen, so dass eine geringere Druckdifferenz ΔP über eine solche Bürstendichtung 1 abbaubar ist.

Figur 3 zeigt ein weiteres Ausführungsbeispiel einer Bürstendichtung 1. Der prinzipielle Aufbau entspricht wiederum dem in Figur 1 beschriebenen, so dass auch hier wieder auf dessen Beschreibung verwiesen wird. Die Enden der Borsten 8 des in Strömungsrichtung vorderen Bürstenpakets 5 sind in diesem Ausführungsbeispiel entgegen der Strömungsrichtung abgeknickt. Durch den Knick wird die Biegesteifigkeit erhöht und so das Aufschwingverhalten der einzelnen Borsten 8 reduziert. Die Biegesteifigkeit der gebogenen Borsten 8 liegt dabei zwischen denen der gebogenen Borsten 8 aus dem Ausführungsbeispiel 1 und den gerade angestellten Borsten 8 im Ausführungsbeispiel 2. Der Anstellwinkel α1 ergibt sich aus der Auslenkung der geknickten Enden der Borsten 8 zur radialen Richtung bezogen auf die Wellenachse. Im Ausführungsbeispiel 3 sind die Borsten 8 des hinteren Bürstenpakets 6 radial zur Wellenachse 7 angeordnet. Die Borsten 8 des hinteren Bürstenpaketes 6 könnten ebenfalls mit geknickten Borsten 8 ausgebildet sein. Dabei ist jedoch darauf zu achten, dass der Winkel α₂ kleiner ist als der Winkel α₁, das heißt die Borsten 8 des vorderen Bürstenpakets 5 stärker in Strömungsrichtung geneigt sind als die Borsten 8 des hinteren Bürstenpakets 6 um wiederum einen gleichmäßigen Druckabfall ΔP über die einzelnen Bürstenpakete 5, 6 zu erzielen.

Grundsätzlich können auch die verschiedenen Arten der Anstellung bei einer Bürstendichtung 1 miteinander kombiniert werden, das heißt es kann beispielsweise die Borsten 8 des vorderen Bürstenpakets 5 gebogen und die Borsten 8 des hinteren Bürstenpakets 6 lediglich durch Neigen der geraden Borsten angestellt sein. Sämtliche Kombinationen sind denkbar, wobei wiederum stets darauf zu achten ist, dass die Anstellung der Borsten 8 des vorderen Bürstenpakets 5 größer ist als die Anstellung der Borsten 8 des in Strömungsrichtung hinteren Bürstenpaketes 6.

Die Bürstenpakete 5, 6 können auch entgegen den Figuren direkt im Turbinengehäuse angeordnet sein, ohne den Gegenstand der Erfindung zu verlassen.

Die Welle 3 kann insbesondere eine Welle einer Turbomaschine und das Gehäuse 4 das Gehäuse einer Turbomaschine sein. Insbesondere kann es sich bei der Welle 3 um die Welle einer Dampfturbine und bei dem Gehäuse 4 um das Gehäuse einer Dampfturbine handeln. Bei Dampfturbinen ist die Abdichtung zwischen den einzelnen Turbinenstufen enorm wichtig, da hier Leckageverluste zu Wirkungsgradeinbußen führen.

## Patentansprüche

1. Bürstendichtung (1) zur Abdichtung eines Spaltes (2) zwischen einer Welle (3) und einem Gehäuse (4), mit wenigstens zwei in Reihe geschalteten Bürstenpaketen (5, 6), welche jeweils aus einer Vielzahl von einzeln, im wesentlichen senkrecht zur Wellenachse (7) gerichteten Borsten (8) bestehen,
**dadurch gekennzeichnet, dass**
die Borsten (8) zumindest des in Strömungsrichtung vorderen Bürstenpakets (5) entgegen der Strömungsrichtung um einen Anstellwinkel (α) angestellt sind.

2. Bürstendichtung (1) nach Anspruch 1,
**dadurch gekennzeichnet, dass**
das Anstellen der Borsten (8) durch neigen der geraden Borsten (8) entgegen der Strömungsrichtung erfolgt.

3. Bürstendichtung (1) nach Anspruch 1,
**dadurch gekennzeichnet, dass**
das Anstellen der Borsten (8) durch Biegen/Knicken der Borsten (8) entgegen der Strömungsrichtung erfolgt.

4. Bürstendichtung (1) nach einem der Ansprüche 1 bis 3,
**dadurch gekennzeichnet, dass**
jeweils das in Strömungsrichtung vordere Bürstenpaket (5) einen größeren Anstellwinkel(α) entgegen der Strömungsrichtung aufweist als das jeweils nachfolgende Bürstenpaket (6).

5. Bürstendichtung (1) nach einem der Ansprüche 1 bis 4,
**dadurch gekennzeichnet, dass**
wenigsten zwei in Reihe geschaltete Bürstenpakete (5, 6) in einem gemeinsamen Bürstenhalter (9) angeordnet sind.

6. Turbomaschine mit einer Bürstendichtung (1) nach einem der vorherigen Ansprüche, zur Abdichtung eines Spaltes (2) zwischen einer Welle (3) und einem Gehäuse (4).

7. Turbomaschine nach Anspruch 6,
**dadurch gekennzeichnet, dass**
das die Turbomaschine eine Dampfturbine ist.
